Europäisches Patentamt

European Patent Office

Office européen des brevets

(19)

(11) Publication number: **0 470 266 A1**

## EUROPEAN PATENT APPLICATION
## published in accordance with Art. 158(3) EPC

(12)

(21) Application number: **91904648.2**

(22) Date of filing: **26.02.91**

(86) International application number:
**PCT/JP91/00245**

(87) International publication number:
**WO 91/13513 (05.09.91 91/21)**

(51) Int. Cl.5: **H04N 1/40**

(30) Priority: **26.02.90 JP 44897/90**

(43) Date of publication of application:
**12.02.92 Bulletin 92/07**

(84) Designated Contracting States:
**DE FR GB**

(71) Applicant: **MATSUSHITA ELECTRIC INDUSTRIAL CO., LTD**
**1006, Oaza Kadoma, Kadoma-shi**
**Osaka 571(JP)**

(72) Inventor: **TAKEUCHI, Jun**
**172, Kamihoshikawa-cho, Hodogaya-ku**
**Yokohama-shi, Kanagawa 240(JP)**

(74) Representative: **Votier, Sidney David et al**
**CARPMAELS & RANSFORD 43, Bloomsbury Square**
**London WC1A 2RA(GB)**

(54) **IMAGE PROCESSOR.**

(57) An image processor in which image data of a pseudo half-tone form read by a scanner (1) are turned back to multiple-valued data upon comparison with dither matrix data, in order to change the dither matrix and concentration on the memory without operating the scanner (1) again.

FIG.1

## TECHNICAL FIELD

The present invention relates to an image processor for use in print publication, photograph preservation and design.

## BACKGROUND ART

In a prior art image processor of the type referred to above, for the purpose of expressing an image original document in terms of binary data with intermediate density, a so-called pseudo half-tone technique is employed in which the original is digitized with the intermediate density.

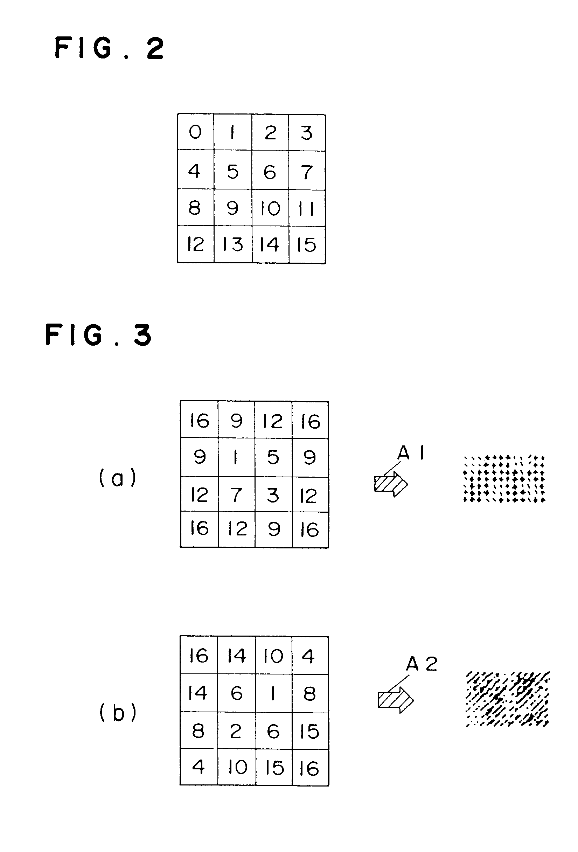

Figs. 3(a) and 3(b) show examples of pseudo half-tone pattern data used for the above purpose. In more detail, such reference pattern data of 4 x 4 data numbered by 0-16 with respect to an image to be read as shown in Figs. 3(a) and 3(b) are previously stored in a memory, the image density of another 4 x 4 dot area read is divided into 16 numeral stages, the divided stage data are compared with those of the above reference pattern data to generate 4 x 4 dot binary data in such a manner that a dot having a number larger than that of the corresponding dot of the reference pattern is assigned to be black otherwise to be white.

In this way, even such an image of data having analog density as a picture can be digitized so that an image close to the original image can be obtained based on the digitized data.

According to the image processing method of such an image processor, even with respect to such multi-valued image original document as a picture, its image data can be obtained and preserved in the form of scales to some extent.

Further, as shown on the right sides of arrows A1 and A2 in Figs. 3(a) and 3(b), net dots or specially-designed-shaped dots are applied so that an image can have a special effect and can be printed so as to give its easy observation.

In addition, the density of the reading density can be adjusted by modifying the numeral values of the pattern data.

The prior art image processor, however, has had such a problem that, since final data are preserved in the form of binary data, even when it is desired to later modify a dither pattern to give a special effect, such modification is impossible and the original image document must be newly read for re-entry of its data.

It is an object of the present invention to provide an excellent image processor which can solve the above problem in the prior art and thus which after scanning an original document, can later modify an image pseudo half-tone processing method, adjust the density of an image and give a special effect, while eliminating the need for re-scanning the original.

## DISCLOSURE OF INVENTION

In accordance with the present invention, the above object is attained by an image processor wherein an image data read out from an original document through an image reading means is converted into a binary data on the basis of a first dither pattern, a binary data/multi-valued data converter converts the binary image data into a multi-valued data by matching the binary image data with the first dither pattern, a multi-valued data/binary data converter converts the multi-valued data into a binary data on the basis of one of dither patterns as a second dither pattern corresponding to one of image processing functions specified by a user to obtain an image having a desired density and special effect. That is, Image Processor performs pseudo half-tone processing by applying the held multi-valued data to the second dither pattern corresponding to the image processing function specified by the user to obtain a binary data.

Therefore, in accordance with the present invention, the half-tone processing of the image data can be quickly modified according to the image processing function specified by the user without operating the image original document reading means several times, and the amount of memory necessary for its operation can be made less.

## BRIEF DESCRIPTION OF THE DRAWINGS

Fig. 1 is a block diagram showing a schematic arrangement of an image processor in accordance with an embodiment of the present invention;

Fig. 2 shows an example of a pattern of binary data sent to a data input/output section through a scanner in the image processor;

Fig. 3(a) shows a data pattern and a diagram for explaining the net-dot processing of a prior art image processor; and

Fig. 3(b) shows a data pattern and a diagram for giving a special effect to an image in the prior art image processor.

## BEST MODE FOR CARRYING OUT THE INVENTION

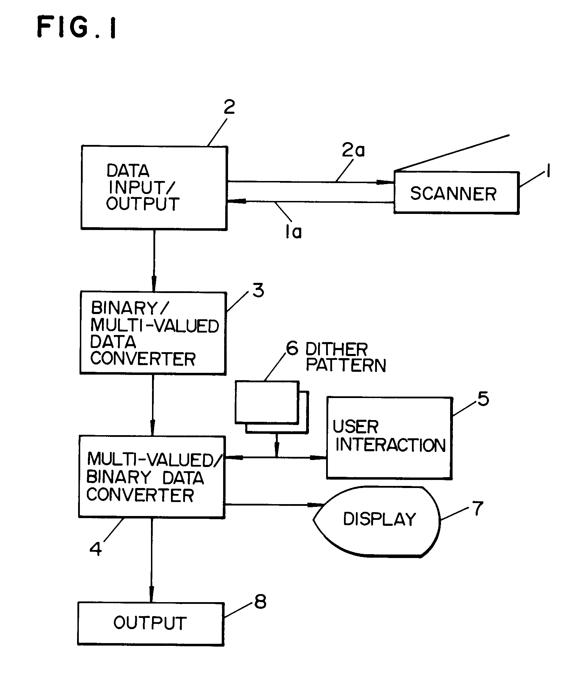

Referring to Fig. 1, there is shown an arrangement of an embodiment of the present invention, in which a scanner 1 as a means for reading an image original document converts an image data read thereby into a binary data 1a on the basis of a dither pattern 2a received from a data input/output section 2 and sends the binary data 1a to the data

input/output section 2.

In the present embodiment, the scanner 1 Explanation will next be made as to the operation of the above embodiment. The scanner 1 reads out an original document image data from an original document, converts the read original document image data into a binary data 1a on the basis of the dither pattern 2a received from the data input/output section 2, and then sends the binary data 1a to the data input/output section 2. The data input/output section 2 outputs the binary data 1a to the binary data/multi-valued data converter 3 as it is.

The binary data/multi-valued data converter 3 matches the dither pattern 2a with image read out through the scanner 1 to restore it into a multi-valued data and hold it therein. In this case, since such a pattern as shown in Fig. 2, the converter 3 can convert the binary data into a multi-valued data without missing any data. The converted multi-valued data is sent from the binary data/multi-valued data converter 3 to the multi-valued data/binary data converter 4.

Meanwhile, when the user specifies one of the image processing functions including reversal or net dot on the user interactive section 5, this causes the multi-valued data/binary data converter 4 to convert the received multi-valued data again into a binary data on the basis of one of the dither patterns 6 corresponding to the image processing function specified by the user on the user interactive section 5.

The multi-valued data/binary data converter 4 further sends the converted binary data to the display 7 to display it thereon. The user, while looking at the display contents on the display 7, specifies an additional image processing function as necessary. The aforementioned operation is repeated to perform the pseudo half-tone processing, that is, the interactive operation of the user interactive section 5 with the user through the multi-valued data/binary data converter 4 is repeated until an image having a desired density and special effect.

In this way, the multi-valued data/binary data converter 4 performs the pseudo half-tone processing and sends the binary data to the output section 8 to preserve it as a document or to print it out.

As will be clear from the foregoing explanation in accordance with the foregoing embodiment, the data of the image original document is converted into a binary data on the basis of the dither pattern 2a, the converted binary data is once converted again into a multi-valued data at the binary data/multi-valued data converter 3, the multi-valued data is again converted into a binary data at the multi-valued data/binary data converter 4 on the basis of the other dither pattern 6 to modify the special effect and density of the image. As a result, the dither pattern can be modified without re-reading the image through the scanner.

Therefore, the operation of the image processor can be made fast and the time required for obtaining a desired image can be shortened.

Since the multi-valued data/binary data converter 4 is operated while holding the image data therein as a multi-valued data with less resolution, the amount of memory necessary for the entire image processor can be made less.

Further, when it is desired to modify the size of the dither pattern 6, for example, to modify the size of the dither pattern to half, this can be realized on the data so far obtained without any need for re-reading it through the scanner.

In addition, although the final data of the image processor is output in the form of a binary data in the foregoing embodiment, the output of the image processor may be preserved in the form of a multi-valued data and may be output in the form of a multi-valued data if the multi-valued data output is desired.

INDUSTRIAL APPLICABILITY

As will be clear from the foregoing embodiment, in accordance with the present invention, the data of the image original document read out through the scanner is converted into a binary data, the binary data is once converted into a multi-valued data and then held therein, and the multi-valued data is again converted into a binary data on the basis of one of many sorts of dither patterns corresponding to one of the image processing functions specified by a user. Accordingly, the half tone processing of the image data advantageously can be quickly modified while eliminating the need for re-reading it through the scanner.

Since the multi-valued data/binary data converter holds therein an image data as a multi-valued data with less resolution, further, the present invention advantageously requires less memory during its operation.

**Claims**

1.  An image processor comprising:

    image reading means for converting an image data read out from an image original document into a binary data on the basis of a first dither pattern;

    binary data/multi-valued data converter for converting said binary data received from said image reading means into a multi-valued data by matching an image of the binary data with said first dither pattern; and

    multi-valued data/binary data converter for performing pseudo half-tone processing on the basis of a second dither pattern as one of various dither patterns corresponding to one of image processing functions specified by a user to convert said multi-valued data again into a binary data to obtain an image having a desired density and special effect.

# FIG.1

# FIG. 2

| 0 | 1 | 2 | 3 |
|----|----|----|----|
| 4 | 5 | 6 | 7 |
| 8 | 9 | 10 | 11 |
| 12 | 13 | 14 | 15 |

# FIG. 3

(a)

| 16 | 9 | 12 | 16 |
|----|----|----|----|
| 9 | 1 | 5 | 9 |
| 12 | 7 | 3 | 12 |
| 16 | 12 | 9 | 16 |

A 1

(b)

| 16 | 14 | 10 | 4 |
|----|----|----|----|
| 14 | 6 | 1 | 8 |
| 8 | 2 | 6 | 15 |
| 4 | 10 | 15 | 16 |

A 2

# INTERNATIONAL SEARCH REPORT

International Application No PCT/JP91/00245

## I. CLASSIFICATION OF SUBJECT MATTER (if several classification symbols apply, indicate all) 6

According to International Patent Classification (IPC) or to both National Classification and IPC

Int. Cl$^5$ H04N1/40

## II. FIELDS SEARCHED

Minimum Documentation Searched 7

| Classification System | Classification Symbols |
|---|---|
| IPC | H04N1/40 |

Documentation Searched other than Minimum Documentation
to the Extent that such Documents are Included in the Fields Searched 8

Kokai Jitsuyo Shinan Koho        1980 - 1990

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 63-102471 (Ricoh Co., Ltd.), May 7, 1988 (07. 05. 88), (Family: none) | 1 |
| Y | JP, A, 64-26990 (Konica Corp.), January 30, 1989 (30. 01. 89), (Family: none) | 1 |
| Y | JP, A, 63-290070 (Toshiba Corp.), November 28, 1988 (28. 11. 88), (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 30, 1991 (30. 04. 91) | May 27, 1991 (27. 05. 91) |
| International Searching Authority | Signature of Authorized Officer |
| Japanese Patent Office | |

Form PCT/ISA/210 (second sheet) (January 1985)